# EUROPEAN PATENT SPECIFICATION

(11) **EP 0 584 242 B1**
(45) Date of publication and mention of the grant of the patent: **13.03.1996**
(21) Application number: 92912577.1
(22) Date of filing: 15.05.1992
(51) Int. Cl.: G01F 1/68, G05D 7/06

(54) **Apparatus for calibrating a mass flow controller**
Einrichtung zur Kalibrierung eines Durchflusssteuereinrichtung
Appareil pour l'étalonnage d'un contrôleur de débit massique

(30) Priority: 17.05.1991 US 702017
(43) Date of publication of application: 02.03.1994
(60) Divisional application: 95113669.6
(73) Proprietor: UNIT INSTRUMENTS, INC., Yorba Linda, CA 92687 (US)
(72) Inventor: DOYLE, James, Holohan, Orange, CA 92667 (US); UPCHURCH, Michael, Dean, Corona, CA 91720 (US); DONALDSON, Richard, Lee, Fountain Valley, CA 92708 (US)
(74) Representative: Cross, Rupert Edward Blount
(86) International application number: US9204110
(87) International publication number: WO9221006

(56) References cited:
- EP-A- 0 403 280
- US-A- 4 860 583
- US-A- 4 884 215

## Description

### BACKGROUND OF THE INVENTION

The invention relates to apparatus for calibrating a mass flow controller. The application also concerns a method and apparatus for translating or modifying a linear command signal from a host process controller to operate a nonlinear response control device. More particularly, the application relates to a method and apparatus for modifying a linear mass flow command signal for a mass flow controller to cause the mass flow controller to respond to the command signal with a linear gas mass flow output even when the mass flow controller's response is itself nonlinear.

One of the problems associated with conventional thermal mass flow controllers is that the electrical response of the thermal mass flow sensing element, which usually comprises a single or pair of sensing windings wound about a sensor tube through which a portion of a flow of gas travels, is nonlinear with respect to the actual mass flow rate of gas or vapor through the sensor tube.

In prior U.S. Patent No. 4,658,855 to Doyle, a mass flow controller includes a segment generator comprising a plurality of precision limiters having operational amplifiers, diodes and potentiometers. The segment generator provides piecewise linearization to the bridge output signal of the mass flow controller. Unfortunately, this type of segment generator must be adjusted by hand when the mass flow controller is manufactured and retains its hand adjustment settings even when the mass flow controller is incorporated in a gas shelf of a diffusion furnace or gas supply system of a chemical vapor deposition apparatus, or a plasma system or the like.

In addition, the segment generator only will adjust at four points along the flow curve, the 25%, 50%, 75% and 100% flow points leaving some nonlinear distortion between those points which may not be zeroed out of the mass flow controller.

Conventional thermal mass flow controllers also suffer from the disadvantage that their response may change as they age in a gas shelf, as parts are worn or as material accumulates in the sensor tube. As a result, the response of the mass flow controllers may shift while the manual settings of their linearizing segment generators do not change.

In order to relinearize such a system, it is conventionally necessary to remove the mass flow controller from the plumbed-in fittings in the gas lines of the gas shelf thereby opening the gas lines to the air which will necessitate having possibly to bake out the reassembled gas system once the mass flow controller is relinearized. This is time consuming and very expensive for a wafer fabricator. In some instances it leads to reluctance to recalibrate the thermal mass flow controllers until wafer yields are adversely affected by the changes in the thermal mass flow controllers.

What is needed then is a method and apparatus which allows effective in situ recalibration of a mass flow controller and which provides highly accurate response to a given flow command signal.

The present invention comprises apparatus for calibrating a mass flow controller, as claimed in claim 1. In normal operation of the controller system, a nonlinear sensed mass flow signal received from a stand-alone mass flow meter or a mass flow meter portion of a mass flow controller. A translated sensed mass flow signal is produced by the inventive apparatus and supplied to a host process controller, such as a direct digital controller or the like. The apparatus, when used with a thermal mass flow controller, receives a linear mass flow command signal from the host process controller and produces a translated mass flow command signal which is received by a mass flow command node or set point signal node of the mass flow controller. Such a nonlinear mass flow command signal is in the form of an analog signal which conventionally may assume any value' between zero and five volts with zero volts representing zero mass flow rate and five volts representing 100% or full flow through the mass flow controller. Given the fact that the mass flow controller being driven by the mass flow command signal may have a nonlinear response to the command signal, it is clear, for instance, that when a one volt signal, nominally representative of 20% flow rate, is sent to the mass flow controller, the mass flow controller may flow gas at a 15% or 25% mass flow rate because the mass flow controller is responding nonlinearly to the linear mass flow command signal.

The apparatus has stored in a nonvolatile memory connected to the microcontroller a multiple entry table of values which represents mass flow offsets or mass flow corrections. When the apparatus receives the linear mass flow command signal from the host process controller, the linear mass flow command signal is digitized by an analog-to-digital converter in the microcontroller, a processing unit of the microcontroller, in response to the flow command digitized signal, accesses a lookup table within the nonvolatile memory of the microcontroller, and the processing unit of the microcontroller generates a digitized mass flow correction signal. The digitized mass flow correction signal is fed to a digital-to-analog converter in the microcontroller. The digital-to-analog converter produces an analog flow command correction signal. The analog flow command signal is added with the linear mass flow command correction signal received from the host process controller to produce a translated or corrected mass flow command analog signal which is then fed to the command pin of the thermal mass flow controller.

The thermal mass flow controller also includes a sensor output pin or node which generates a sensed mass flow signal which may be perturbed by the nonl-inear response of the mass flow controller. The sensed mass flow signal is received by the apparatus and is digitized. The processing unit accesses a flow correction value from the EPROM. The flow correction value is supplied to the digital-to-analog converter which produces an analog sensed flow correction signal. The analog sensed flow correction signal is subtracted, in a summing amplifier, from the analog sensed mass flow signal to yield a translated or linearized mass flow rate signal. The linearized mass flow rate signal is supplied to the host process controller. Thus, the host process controller sends a linear zero to five volt mass flow command signal and receives back a linear second mass flow rate signal in a fashion which is completely transparent to the host process controller. The signals are modified by the inventive apparatus so that a nonlinearly responding mass flow controller can operate in response to a linear signalling host process controller. It should be appreciated that the signal which is being modified is the command signal and not the internal bridge signal within the flow controller as is taught by Doyle.

In order to generate the data which is stored in the lookup table of the EPROM a calibration system embodying the instant invention as claimed in claim 1 is provided. The calibration system includes means for sweeping through a set of calibration values using a sine wave signal. The sine wave signal has a period approximately ten times longer than the time constant of the mass flow controller. One of the problems which has been encountered in the past is that in order to calibrate mass flow controllers, settling time must be allowed for after each commanded flow. The settling time, for instance, for four or five points for a conventional flow controller might require a calibration time of one half hour or more.

The use of the single frequency or sine wave curve allows a large number of points, such as 256 points, to be rapidly swept through in the space of only about thirty seconds. This represents an increase of several orders of magnitude in the rate at which the mass flow controller may be calibrated. The lag primarily due to the mass flow controller time constant causes a constant phase shift to be effected because only a single frequency is being input into the mass flow controller. The phase shift may be matched by the calibrator after a first sine wave sweep. After the second sine wave sweep, the phase adjusted flow signal is compared to the setpoint on a point by point basis, allowing a full 256 point calibration table to be generated in only one minute. The generated calibration table is then sent via a digital link to the inventive command signal modifying apparatus where it is stored in the nonvolatile memory of the microcontroller. The non-volatile memory has sufficient space to store up to ten tables each of which, for instance, may be representative of the mass flow rate calibration offsets for a different gas species, e.g., nitrogen, phosphine, oxygen, phosphorus oxychloride, diborane, sulfur hexafluoride, silane and the like.

Thus the present invention as claimed provides a calibration system for a mass flow controller which can rapidly calibrate a number of points by the use of a single frequency sine wave sweep.

Other aspects and advantages of the present invention will become obvious to one of ordinary skill in the art upon a perusal of the following specification and claims in light of the accompanying drawings.

### BRIEF DESCRIPTION OF THE DRAWINGS

FIG. 1 is a block diagram of a system embodying the present invention;
FIG. 2 is a schematic diagram of a signal translator shown in FIG. 1;
FIG. 3 is a block diagram of a microcontroller included in the signal translator shown in FIG. 2;
FIG. 4 is a block diagram of an interface board adapted for connection to an IBM compatible type PC AT microcomputer AT bus and for connection to a calibrator as shown in FIG. 1;
FIG. 5 is a schematic diagram of a parallel to serial interface;
FIG. 6 is a block diagram of the inventive translator connected between the host processor and the calibrated mass flow controller;
FIG. 7 is a flow diagram of the cable_start routine executed by the microcontroller upon power up;
FIG. 8 is a flow diagram of the check_sys_mem routine executed by the microcontroller on power up;
FIG. 9 is a flow chart of the init_all routine executed by the microcontroller on power up;
FIG. 10 is a flow diagram of the check_switch routine executed by the microcontroller on power up;
FIG. 11 is a flow diagram of the flow_mode routine executed by the microcontroller in the normal control operation;
FIG. 12 is a flow diagram of a timer routine to allow the analog-to-digital converter to operate;
FIG. 13 is a flow diagram of an analog-to-digital converter routine;
FIG. 14 is a flow diagram to determine whether the microcontroller is in a normal control mode or is in a calibration mode;
FIG. 15 is a flow diagram to control transfer of calibration information between the personal computer and the microcontroller;
FIG. 16 is a flow diagram of a routine for reading and storing input analog signals from the calibration system and the mass flow controller during calibration;
FIG. 17 is a flow diagram of a routine for verifying a command from the calibrator system to operate in flow mode using calibration data from a specified calibration table;
FIGS. 18A and 18B are a flow diagram of a routine for transferring information from the calibrator system to a volatile memory of the inventive apparatus;
FIG. 19 is a flow diagram of a routine that specifically transfers the downloaded calibration data from volatile to non-volatile memory;
FIGS. 20A and 20B are a flow diagram of a routine that transfers data from the non-volatile memory to the calibration system;
FIG. 21 is a flow diagram of a software reset routine;
FIG. 22 is a flow diagram of a switch reset routine for unhandled errors;
FIG. 23 is a flow diagram of a main routine for execution in the personal computer of the calibration system; and
FIG. 24 is a flow diagram of a calibration routine for generating a sinusoidal calibration function and downloading the resulting data correction points to the signal translator.

### DETAILED DESCRIPTION OF THE PREFERRED EMBODIMENT

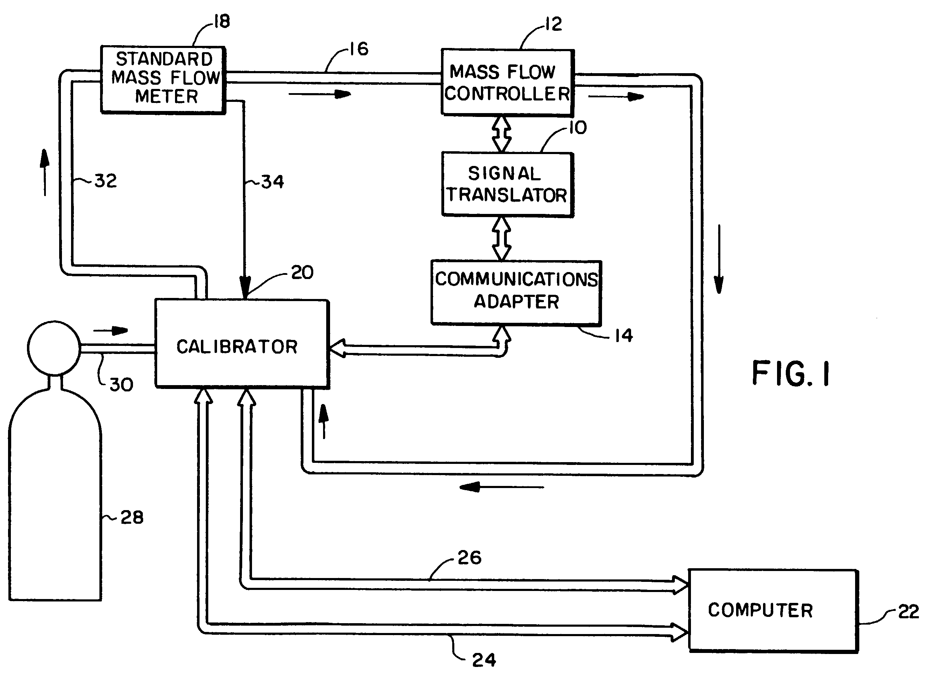

Referring now to the drawings and especially to FIG. 1, an apparatus or signal translator 10 for translating a nonlinear mass flow meter signal and embodying the present invention is generally shown therein.

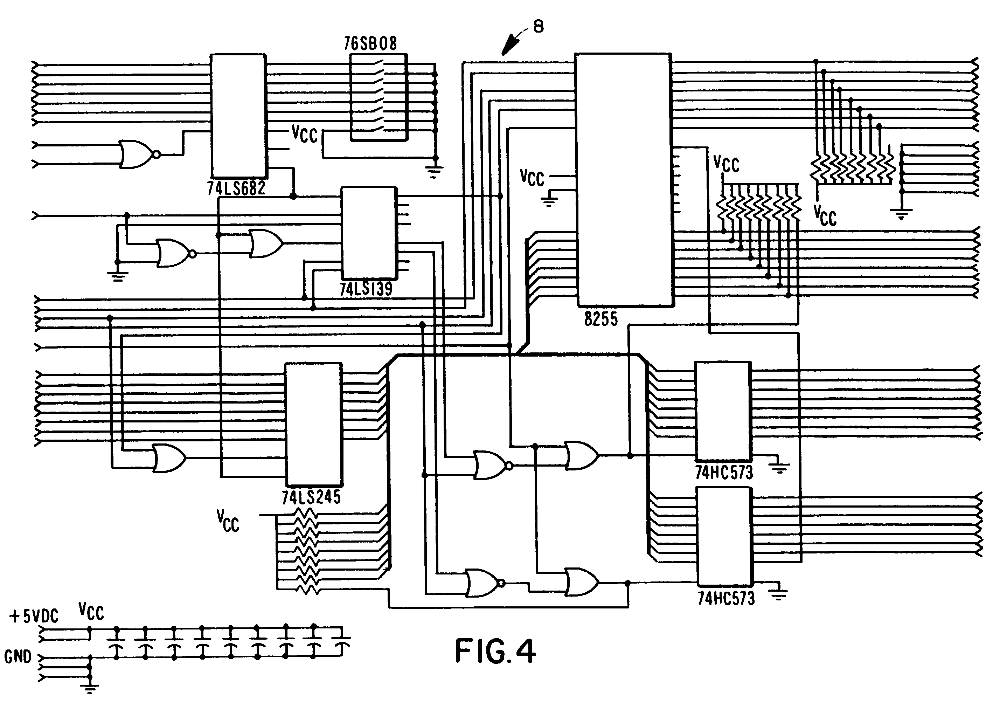

The signal translator 10 is coupled to a mass flow controller under test 12 and to a communications adapter card 14. The mass flow controller under test 12 is connected in a gas loop 16 to receive gas from a standard mass flow meter 18, which can be a transfer standard or secondary standard, and which in turn is connected to a Unit Instruments, Inc., XCAL-200 automatic calibrator 20. The XCAL-200 is part of the XCAL-200 system which includes a computer 22 comprising an IBM PC/AT personal computer having a MetraByte-16 signal processing board therein connected to a communications bus 24 which is also connected to the calibrator 20 and a parallel interface 8 of the type shown in FIG. 4 connected to a communications bus 26 which is also connected to the calibrator 20.

A source of gas, which may comprise a compressed gas tank 28, is connected by a gas feedline 30 to the calibrator 20. The calibrator 20 delivers gas via gas feedline 32 to the secondary standard mass flow meter 18. Mass flow meter 18 is connected by a communications line 34 to supply the mass flow reference signals to the calibrator system which is controlled by software executing in the PC/AT computer. The standard UICALSYS software, which is available with Unit Instruments' XCAL-200 calibration system, is employed with the exception of certain software which executes on the personal computer 22 for performing sine wave calibration. In operation, the computer 22 commands the calibrator 20 to select a commanded flow rate which is then measured by the standard mass flow meter 18 and fed back to the calibrator 20. The mass flow controller output signal is also fed to the calibrator 20 and compared with the standard and an offset value is determined and stored in memory in the calibrator 20. More specifically, the calibrator 20, rather than being stepped through three or four points, is stepped through a plurality of points whose values are a sine wave function with respect to time. The sine wave function is a simple sine wave having a single frequency. The period of the sine wave is approximately ten times the time constant of the mass flow controller 12.

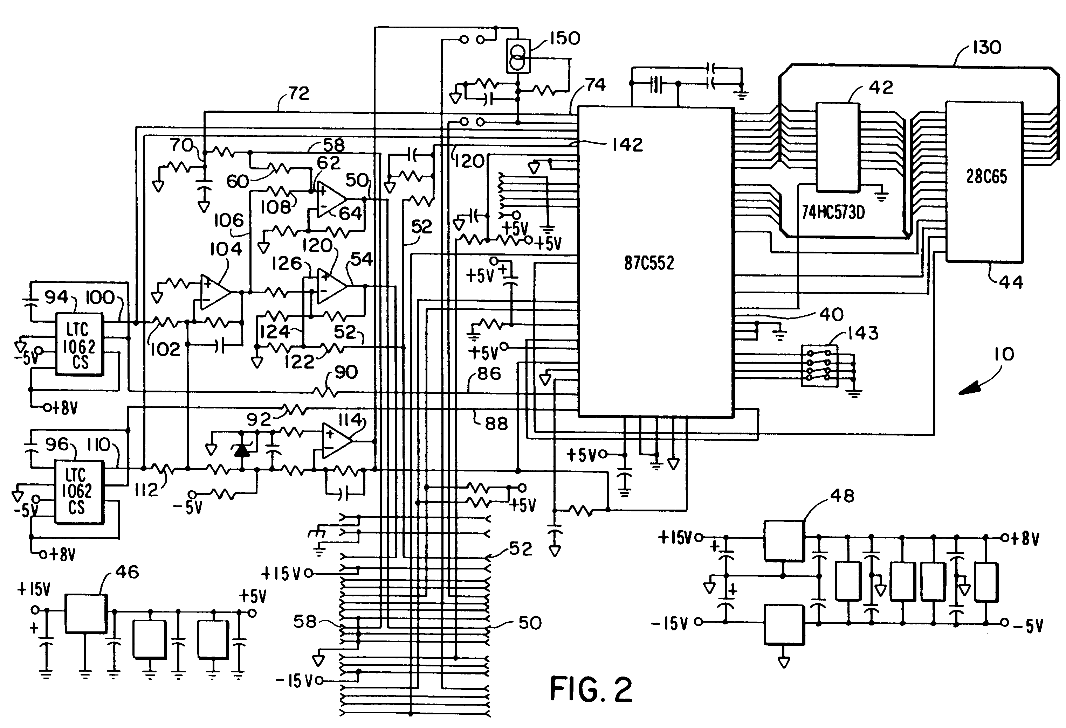

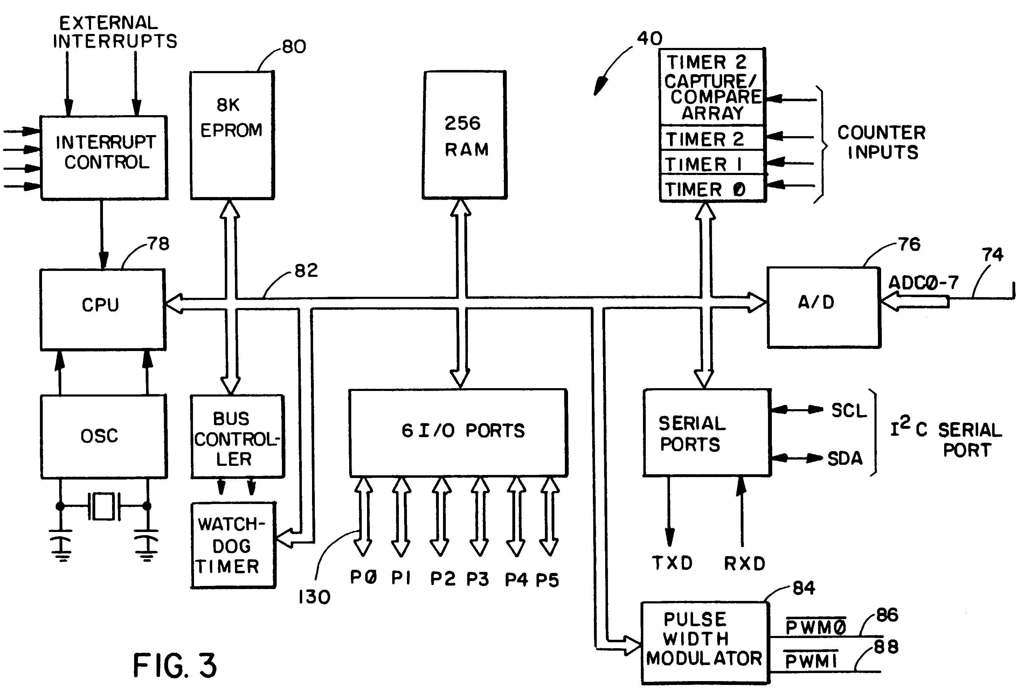

Referring now to FIGS. 2 and 3, the signal translator 10 is shown therein in more detail. The signal translator 10 includes a Signetics 87C552 microcontroller generally identified by numeral 40 connected to a latch 42 which is a 74HC573D and also connected to a 28C65 EPROM memory 44. The EPROM memory 44 is used to store calibration data therein. The power for the signal translator is provided by a first power supply 46 and a second power supply 48 which generate regulated +8 volt, +5 volt and -5 volt potentials in a conventional fashion.

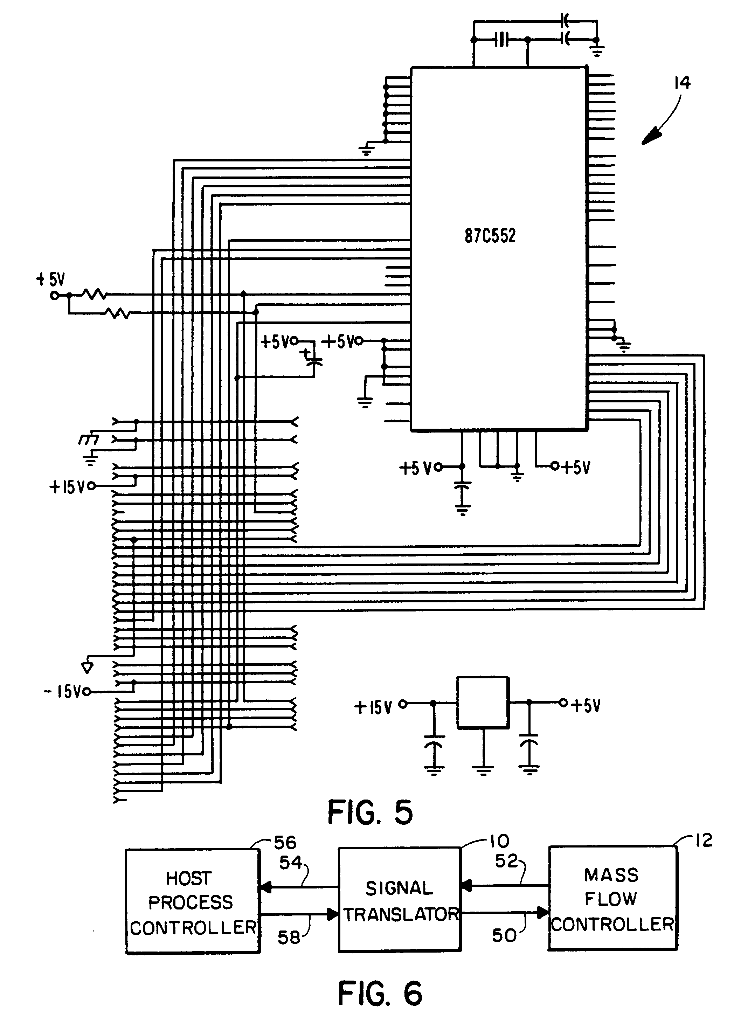

In operation, the signal translator 10, as may best be seen in FIG. 6, is connected to the mass flow controller 12 via a pair of analog signal lines 50 and 52 with analog signal line 50 carrying a corrected or translated mass flow rate command signal to the mass flow controller 12 which is delivered to its set point pin. The line 52 carries the uncorrected or raw sensed mass flow rate signal from the mass flow controller 12 to the signal translator 10. A line 54 from the signal translator 10 to a host process controller 56 carries the corrected or translated linear sensed mass flow rate signal to the host process controller 56. A line 58, connected from the host process controller 56 to the signal translator 10, carries a linear mass flow rate command signal to the signal translator 10. The signals on lines 58 and 54 are substantially linear signals with respect to flow while the signals on lines 50 and 52 are non-linear signals with respect to flow.

The linear mass flow command signal from line 58 is supplied to a resistor 60 connected to a noninverting input pin 62 of an operational amplifier 64. Operational amplifier 64 is configured as a summing amplifier and has its output connected to the line 50 which is connected to the set point pin of the mass flow controller 12. In addition, the line 58 supplies the linear mass flow signal through a filter 70 to a line 72 connected to an ADC0 input pin 74 of the microcontroller 40. That signal, which is supplied to the microcontroller 40, is received by an onboard analog-to-digital converter 76 which produces an eight-bit digitized signal which is supplied to a central processing unit 78 of the microcontroller 40. The central processing unit 78 operates under the control of a control program stored in 8K EPROM memory 80 connected to a system bus 82 coupled to the CPU 78. Also coupled to the system bus 82 is an onboard digital-to-analog converter, more specifically comprising a pulse width modulator 84 providing outputs at lines PWM0 and PWM1 which are respectively numbered 86 and 88. The pulse width modulated zero pin 86 is connected to a resistor 90. The pulse width modulated one pin 88 is connected to a resistor 92. Resistor 90 is connected to a five pole low pass Butterworth filter 94 which is an LTC 1062CS. The resistor 92 is connected to an identical low pass five pole Butterworth filter 96. The combination of the pulse width modulation feature and the low pass filters, generates analog output signals so that the pulse width modulators 86 and 88 and the low pass filters 94 and 96 act as a digital-to-analog converter. An output line 100 connected to the filter 94 supplies a signal through a resistor 102 to an amplifier 104 which feeds a signal through a line 106 to a resistor 108 connected with the resistor 60 to the summing junction of the amplifier 64. Similarly, the output signal on line 88 is supplied through the low pass filter 96 to a line 110 which drives a resistor 112 connected to the amplifier 104. The amplifier 104 is also connected to an amplifier 120 having the linearized flow signal output line 54 connected to the output thereof. The amplifier 120 also receives the raw or unconditioned, sensed mass flow controller signal from line 52 through a resistor 122, coupled to a line 124, which is coupled to the noninverting pin 126 of the amplifier 120.

The EPROM memory 44 has stored within it multiple calibration or set point tables, each of which consists of 256 points for which correction values are stored. The signal translator 10, acting through the microcontroller 40, receives the linear signal MFC IN through line 58 and supplies it to pin 74, where it is converted to a digital signal, processed by the microcontroller 40 and used to access a selected portion of the calibration table in the EPROM 44. That offset signal is then supplied to the microcontroller 40 through an external data bus 130 where it is used to control the pulse width modulator 84 to provide an output on lines 86 and 88. That output is low pass filtered and is fed through the amplifier 104 to the summing amplifier 64 where the analog corrected signal received from a low pass filter 94 is added to the linear signal from the line 58 to provide a corrected analog mass flow controller signal on line 50 fed to the mass flow controller.

Likewise, the sensed signal being fed back through the line 52 is delivered to a line 140 coupled to an ADC4 pin 142 and fed to the analog-to-digital converter 76 where it is digitized, fed out over the system bus 82 to the CPU 78, and used by the CPU 78 to access the EPROM 44 through the bus 130.

The offset from the calibration table stored in EPROM 44 is fed via the bus 82 to the pulse width modulator 84 where a pulse width modulated signal is produced at the pin 86 and supplied to the low pass filter 94. The filter 94 produces an analog sensed mass flow correction signal supplied through the amplifier 104 to the amplifier 120 at its inverting input. The noninverting input receives the uncorrected sensed mass flow signal, from which the correction signal is subtracted to yield a corrected sensed mass flow analog signal which is output through line 54 to the host process controller 56.

In certain situations, it may be desirable also to provide an offset for the ambient temperature. A temperature sensitive current source 150 is coupled to the microcontroller 40 to provide an analog input representative of the temperature, although not presently used in the present invention.

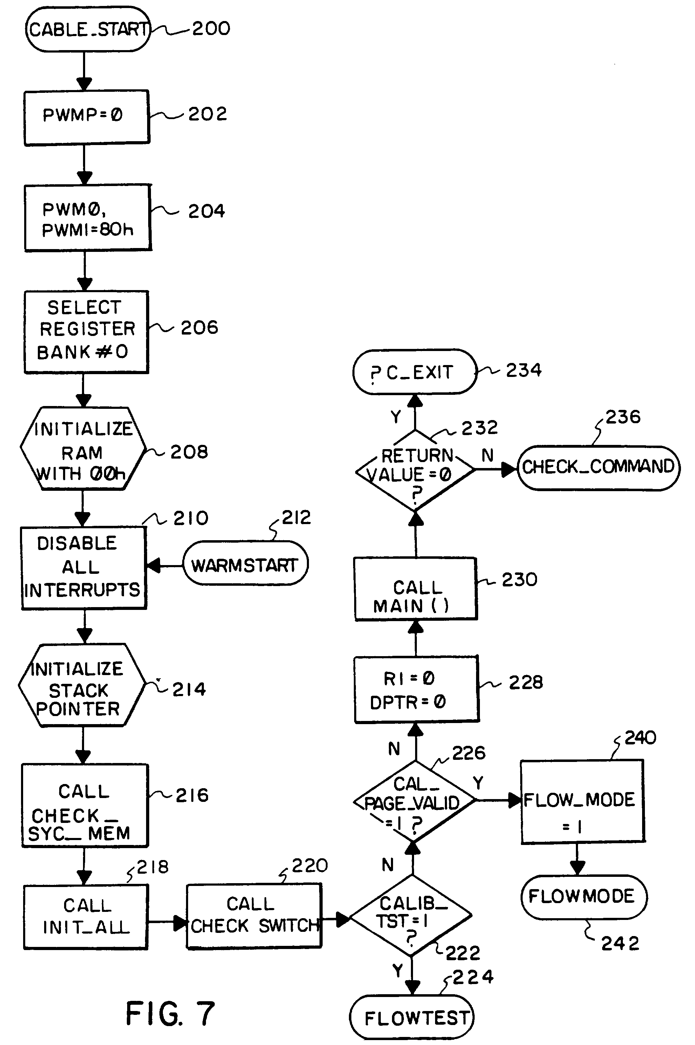

More specifically, the microcontroller 40 operates by execution of software, the execution of which is shown in FIGS. 7-22 comprising software flow charts.

Referring now to FIG. 7, the cable or signal translator start routine is shown therein which is entered at a step 200 following which zero is stored in the pulse width modulator pre-scaling register in a step 202. The pulse width modulator is set at mid-range in a step 204. In step 206 register bank zero is selected. The random access memory is initialized in step 208. Interrupts are disabled in step 210. It may be appreciated that when the signal translator 10 is started on a warm start basis from a step 212, the interrupts are disabled first without any of the previous steps 200 through 208 being performed. Following step 210, the stack pointer is initialized in step 214. The check system memory routine may be called in a step 216. The initial init all routine is called in step 218 and the check switch routine is called in step 220. In step 222 the flow test routine is tested for previous execution. Control is transferred to the flow test routine in step 224. If the calibration test flag is off the calibration valid bit is tested in step 226. If calibration page is valid, the flow mode bit is set to one in a step 240. If it is not, R1 and the data pointer are both loaded with zeroes.

The return value is returned by the main function in step 230. If the return value is zero in step 232, step 234, the C exit routine, is entered. If the return value is one, the check command routine is entered in a step 236.

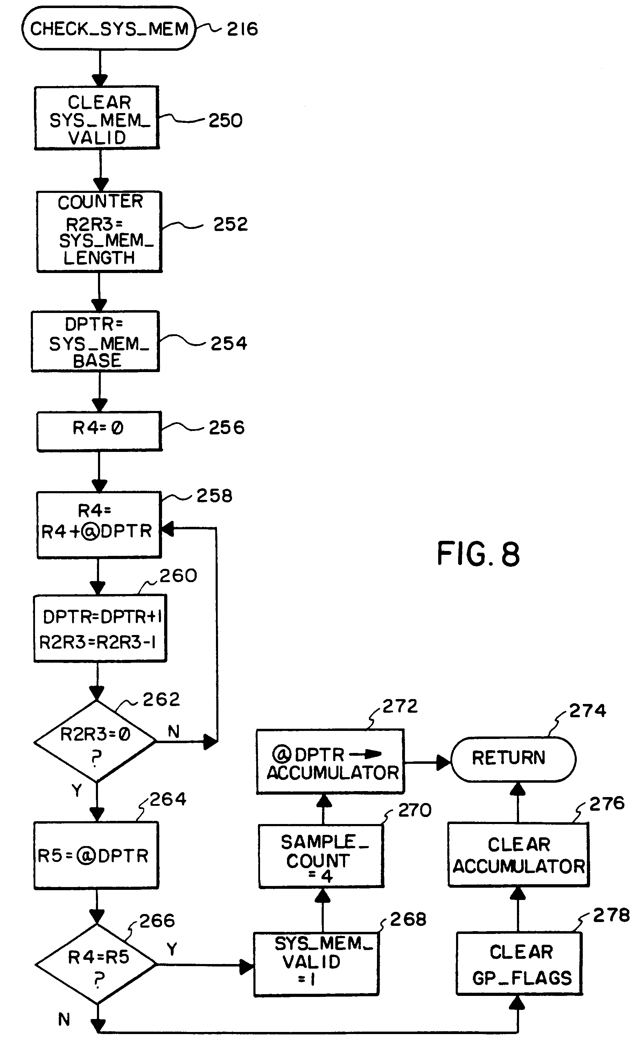

Referring now to FIG. 8, the CHECK_SYS_MEM routine from step 216 is entered. A system memory valid flag is set to zero in a step 250. The countdown counter R2R3 is set to the length of the system memory, in order to indicate to the microcontroller 40 the size of the non-volatile memory 44. In step 254, DPTR is set to equal the base address for the non-volatile memory 44. R4 is set equal to zero in the step 256. In steps 258, 260 and 262, contents of the EPROM are summed in order to perform a check sum function. In step 264, the end location of the EPROM, which contains a check sum byte, is loaded into R5. The check sum R4 is compared to the storage check sum value. If they are equal, SYS_MEM_ VALID is set equal to one in step 268. Sample count is set equal to four in step 270, which is the number of times a particular flow data point must be sampled. The data pointer contents are loaded into the accumulator in step 272 and the signal translator or cable start routine is returned to in step 274. If the check sum equals the stored check sum, the general purpose flags are cleared in step 278. The accumulator is cleared in step 276 and the initialize all routine is then entered from the cable start routine at step 218.

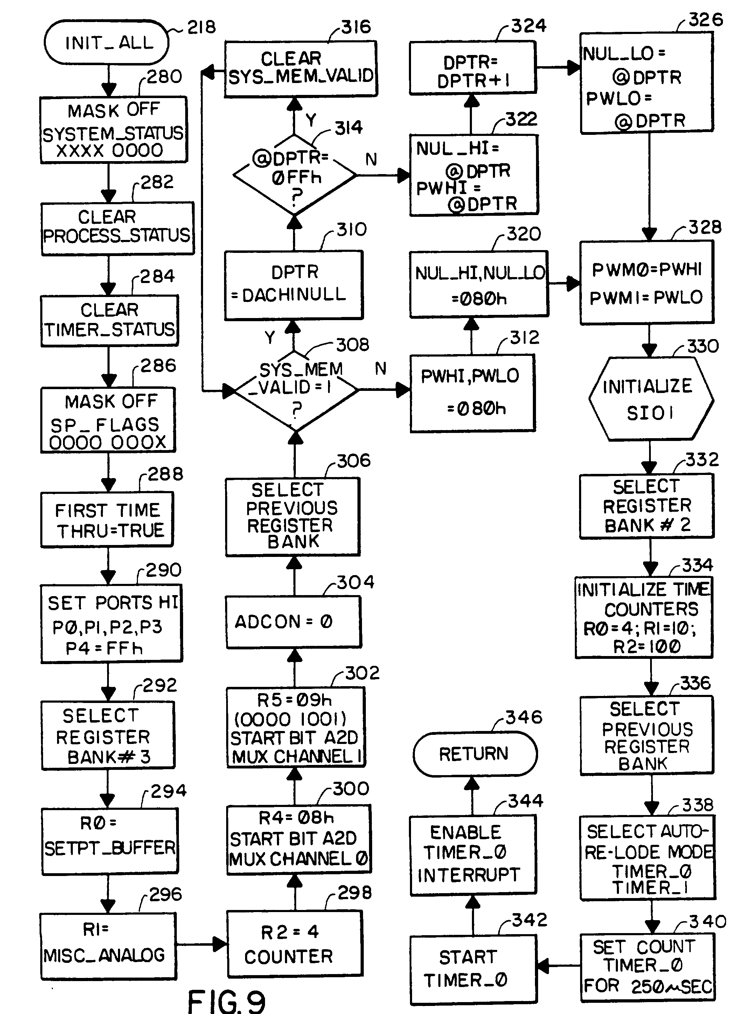

Referring now to FIG. 9 where the INIT_ALL routine is set forth, in step 280 the system status low order bits are set to zeroes, the process status flag is cleared in step 282 and the timer status flag is cleared in step 284. GP flags are set to zero, with the exception of the lowest order bit, in step 286. The first time through variable is set equal to true in step 288. In step 290, the ports P0, P1, P2, P3 and P4 are set high with all their bits set equal to one. In step 292 register bank three is selected. In steps 294 and 296 register zero is loaded with the set point buffer address and register one is loaded with the miscellaneous analog address. R2 is loaded with four in step 298 and R4 is loaded with eight in step 300 so that there is a start bit loaded for the A to D conversion and the multiplexer channel is set to zero. In step 302, R5 is loaded with the bit pattern for the start bit for the analog-to-digital converter multiplexer channel one. In step 304, the control register for the A to D conversion is loaded with zero. In step 306, the previous register bank is selected. The SYS_MEM_VALID bit is tested in step 308. If it is equal to one control transfers to step 310, where the data pointer is loaded with DACHINULL. If sys mem valid is equal to zero, the pulse width high and low bytes are set to the median range in step 312. In step 320, they are echoed to the storage bytes NUL_HI and NUL_LO. In step 328 they are transferred to the pulse width modulator lines zero and one to generate the unfiltered signals supplied to lines 86 and 88. If the data pointer bits are all high, the sys mem valid flag is cleared and then tested again in step 308. If the data pointer bits are not all high, step 322 is executed where the NUL_HI and PWHI values are loaded with the value pointed to by the data pointer. The data pointer is incremented in step 324. In step 326, the NUL_LO and PWLO values are then loaded so that the NUL_HI, NUL_LO and PWHI and PWLO values are stored in consecutive locations in memory.

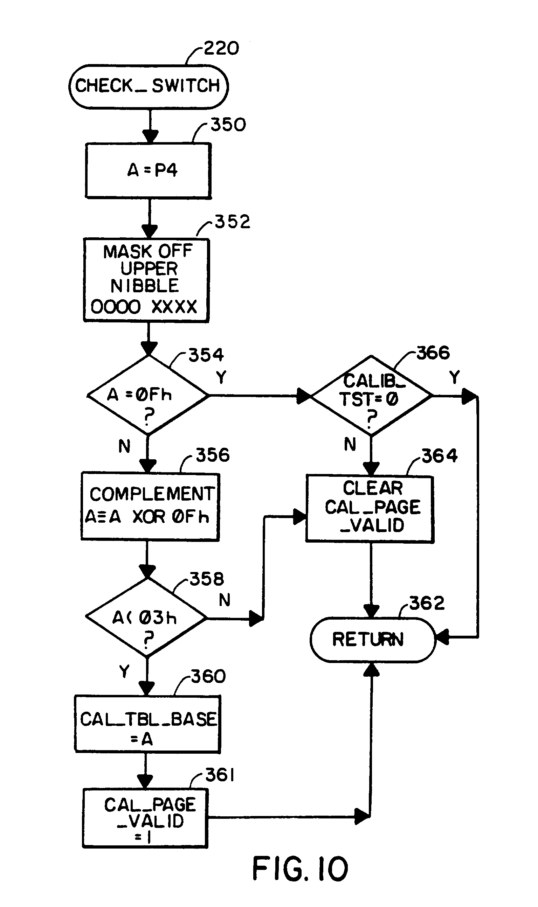

After step 328 has been performed, the serial interface one is initialized in step 330. Register bank 2 is selected in step 332. The time counters are initialized in step 334. Subsequent to that, in step 336, the previous register bank is selected and the timers are initialized and started in steps 338 through 344. The routine then exits in step 346, following which the check switch routine set forth in FIG. 10 is usually entered.

Referring now to FIG. 10, the routine for checking a DIP switch 143, connected to port 4 of the microcontroller 40 is shown therein. The electrical signals from port 4 are loaded into variable A in a step 350. The upper four bits or upper nibble of the byte are masked off in a step 352. A test is performed in a step 354 to determine whether the lower nibble is all ones. If it is not, the variable A is complemented in a step 356. In a step 358, the value of the variable A is tested to determine if it is less than eleven, indicting a valid calibration page. If it is, the variable A is loaded, in a step 360, into the calibrate table base variable which is the variable used to indicate the specific gas table selection. In a step 361, the calibrate page valid flag is loaded and in a step 362, the routine is returned from. In the event that the lower nibble of the A variable is all ones, a step 366 is entered. The calibrate test flag is tested. If it is zero, the routine returns. If it is one, the calibrate page valid flag is cleared or set to zero indicating that a valid calibration page was not sensed from the switches.

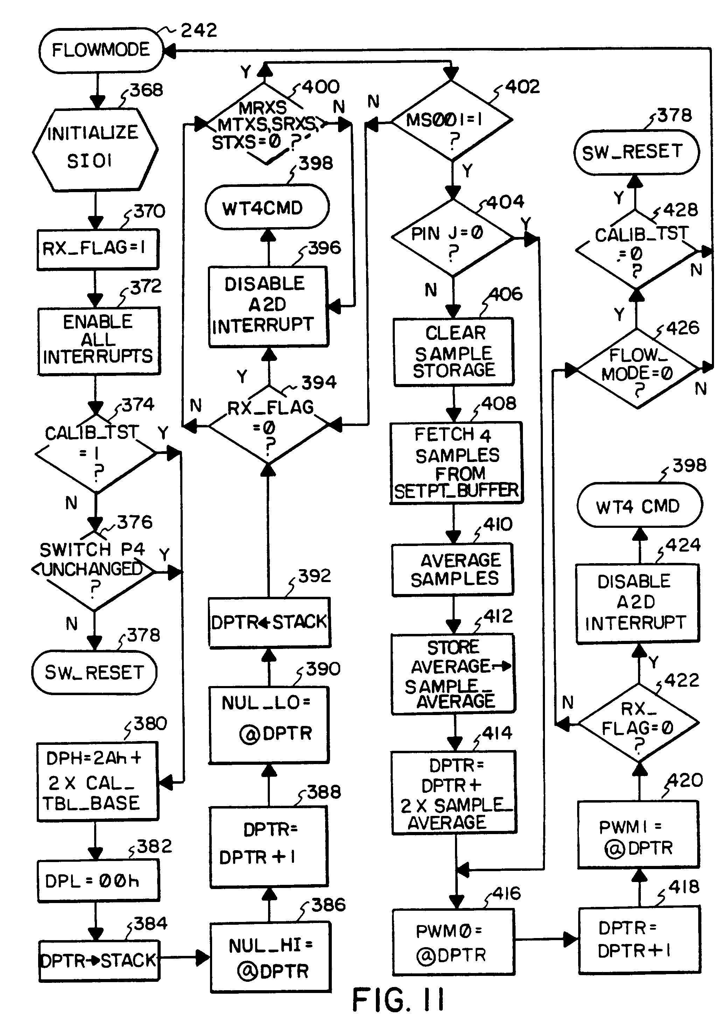

Referring now to FIG. 11, the flow mode routine is entered in step 242. In step 368, the serial I/O is initialized and in step 370 the receive flag is set equal to one. In step 372 all interrupts are enabled and in step 374 the calibration flag is tested. If -the calibration flag is equal to zero, a test is performed in step 376 to determine if the state of the DIP switch 143 has changed. If it is unchanged, the step 380 is entered. If it has changed, control is transferred in step 378 to the switch reset routine. In step 380, the data pointer is loaded. The low portion of the data pointer is set equal to zero in step 382 and the data pointer is loaded on the stack in step 384. In step 386, the NUL_HI is loaded from the DPTR. In steps 388 and 390, the high and low bytes are loaded into NUL_HI and NUL_LO, at which point the stack is exited in step 392. In step 394, the receive flag is tested. If it is equal to zero, the A to D interrupt is disabled in step 396. If it is equal to one, a test is entered in the step 400 to determine whether all the transmit and receive flags have been set to zero. If they have not, step 396 is entered, the interrupt is disabled, and the wait for command portion of the check command routine is entered in the step 398. If any of the transmit or receive flags are set equal to one, the step 402 is entered if MS001 is equal to zero. Testing is done in step 402 to ensure that four samples are being taken at two hundred fifty microsecond intervals. In step 404, pin J of the mass flow controller 12 is tested to determine if it has been set equal to zero indicating that the valve of the mass flow controller 12 is set off. If it has been set equal to zero, control is transferred to step 416 where the pulse width modulator 84 is loaded with the contents of the address to which the data pointer is pointing. The data pointer is incremented in step 418 and pulse width modulator one is loaded with the contents of the next address in step 420. The receive flag is tested in step 422. If it is equal to zero, the A to D interrupt is disabled. If it is not equal to zero, a test is made in step 426 to determine whether the flow mode_flag is equal to zero. If it is equal to zero, the calibration test flag is tested in step 428 and if the calibration test is set equal to zero, the switch reset is entered in step 378.

In the event that pin J of the mass flow controller 12 is not equal to zero, the step 406 is entered and the sample storage is cleared. Four samples are fetched from the set point buffer. In step 408, they are averaged and in step 410 the average is stored in step 412. The data pointer is loaded with the previous contents of the data pointer plus two times the sample average in step 414.

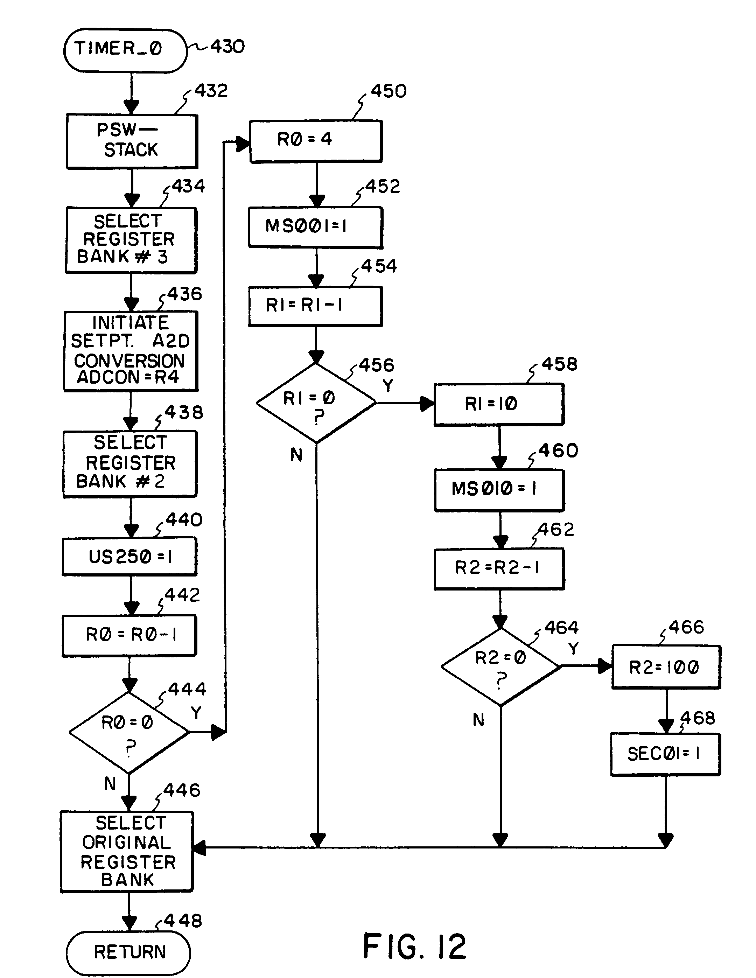

Referring now to FIG. 12, a timer routine 430 is set forth therein. The timer routine 430 functions by providing a signal to the microcontroller 40 indicating that 250 microseconds has passed. In order to do this, in step 432, the program status word, is pushed onto the stack. In step 434, register bank number three is selected. In step 436, the set point A to D conversion is initialized. In other words, the linear command signal received from the host-process controller 56 is converted to a digital value. In step 438, register bank two is selected and in step 440, the 250 microsecond flag is set equal to one. The R0 value, which was originally four, is decremented one. In step 442 and in step 444, R0 is tested to determine whether it is equal to zero. If R0 is greater than zero, the original register bank is selected in step 446, and return is exited in step 448. If R0 is equal to zero, it is set to four in step 450. The millisecond 001 variable is set to one in step 452. R1 is decremented in step 454 and is tested in step 456. If R1 is equal to zero, step 458 is entered where it is set equal to ten. The ten millisecond flag is set in step 460 and R2 is decremented in step 462. In the event that R2 is not equal to zero, step 446 is entered. If it is not equal to zero, the original register bank is selected in step 446. If it is equal to zero, R2 is set equal to 100 in step 466. SEC01 is set equal to one in step 468.

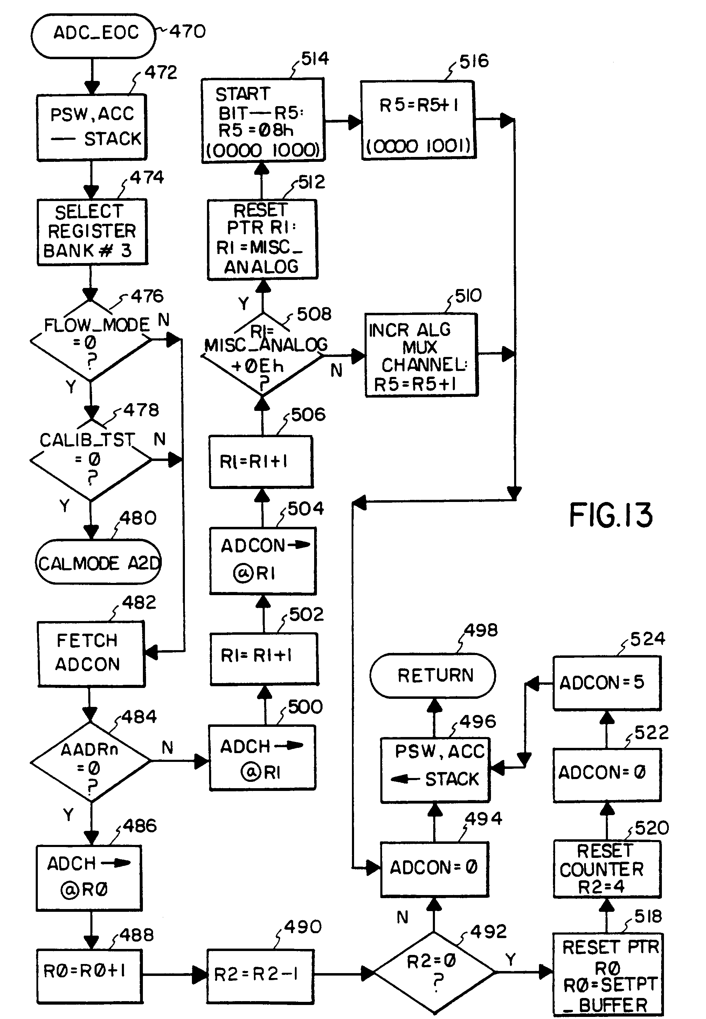

In FIG. 13, the analog-to-digital converter routine 470 is entered. The program status word and the accumulator contents are pushed onto the stack in step 472. Register bank three is selected in step 474. A test is made in step 476 to determine whether the signal translator is in flow mode or not. If it is in flow mode, control branches to step 482. If it is not in flow mode, it should probably be in calibrate mode. Control is transferred to the calibrate test step 478. If calibrate test is set equal to zero, control is transferred to the calibrate A to D mode in step 480. If the calibrate test is not equal to zero, control is transferred to the fetch ADCON in step 482. ADCON is the control variable for the analog-to-digital converter. In step 484, if the AADRN bit is set equal to zero. Control is transferred to step 486 where the digital contents of the analog-to-digital converter are fetched. They are loaded into the location where RO is pointing. R0 is incremented by one in step 488. R2 is decremented by one in step 490. R2 is tested in step 492. If it is not equal to zero, the analog-to-digital converter register is set equal to zero and the program status word and accumulator are restored from the stack in step 496. The routine returns in step 498. In the event miscellaneous analog-to-digital conversion is to be performed, the routine at step 500 is entered where the digital signal corresponding to the analog signal is loaded into the address pointed to by R1. R1 is incremented in step 502 and two bits of the analog-to-digital control are also added at location R1. R1 is incremented in step 506. A test is performed in order to determine whether the steps have been performed seven times. If they have, pointer register R1 is reset to point to the base of the miscellaneous analog buffer in step 512. A start bit is loaded in R5 in step 514. R5 is incremented in step 516. If the test of step 508 is negative, the next immediate multiplexer channel is selected by step 510 and control is transferred to step 494.

In the event that the contents of R2 are equal to zero, the pointer R0 is reset by loading it with the address of the set point buffer. The counter R2 is reset by loading it with four. In step 520, ADCON is set equal to zero in step 522 and then it is loaded with the contents of R5 in step 524 after which control is transferred to step 496.

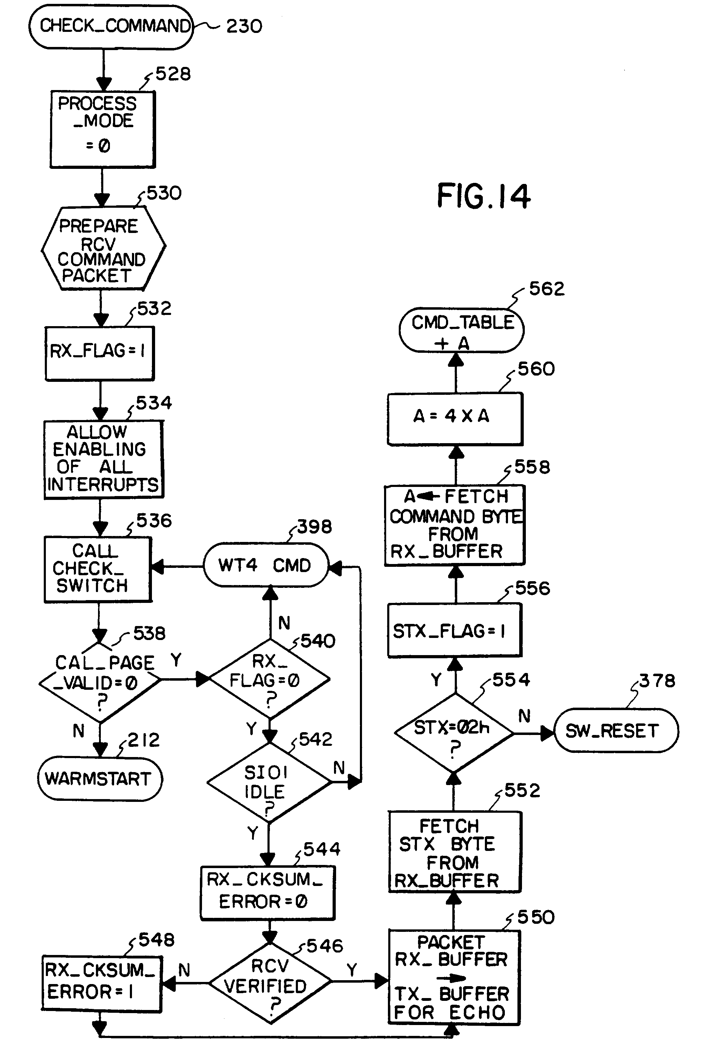

In FIG. 14, the check_command routine, a command interrupt has occurred. The process mode is set equal to zero, in step 528. In step 530, preparation is made to receive the command packet. In step 532, the receive flag is set equal to one. In step 534, all interrupts may be enabled, depending upon input signals. In step 536, check_switch is called. After check_switch completes the cal_page_valid flag is tested in a step 538. If cal_page_valid is equal to one, control is transferred to warm start step 212. If cal_page_valid is equal to zero, the receive flag is tested in step 540. If the receive flag is one, wait for command is entered in step 398. If the receive flag is zero, a test is performed in step 542 to determine whether the serial I/O port one is idle. If the serial I/O port is active, control transfers to wait for command step 398. If it is idle, the receive_check_sum_error flag is set equal to zero and a test is made for receive verified. If the receive has not been verified to receive check sum error, is set equal to one in step 548. Control is transferred to step 550. If the receive is verified, control is transferred directly to step 550 where material received, stored in the receive buffer is copied into the transmit buffer for echoing. A test byte is fetched from the receive buffer. In step 552, it is tested to determine whether it is equal to two. In step 554, if it is not, the software reset is entered in step 378. If it is valid, the stx-flag is set equal to one, in step 556, and the command byte from the receive buffer is transferred into the accumulator. In step 558, the contents of the accumulator are multiplied by four. In step 560 and in step 562, the base address of the command table is added to the accumulator contents to enable control to be transferred to a command in the command table.

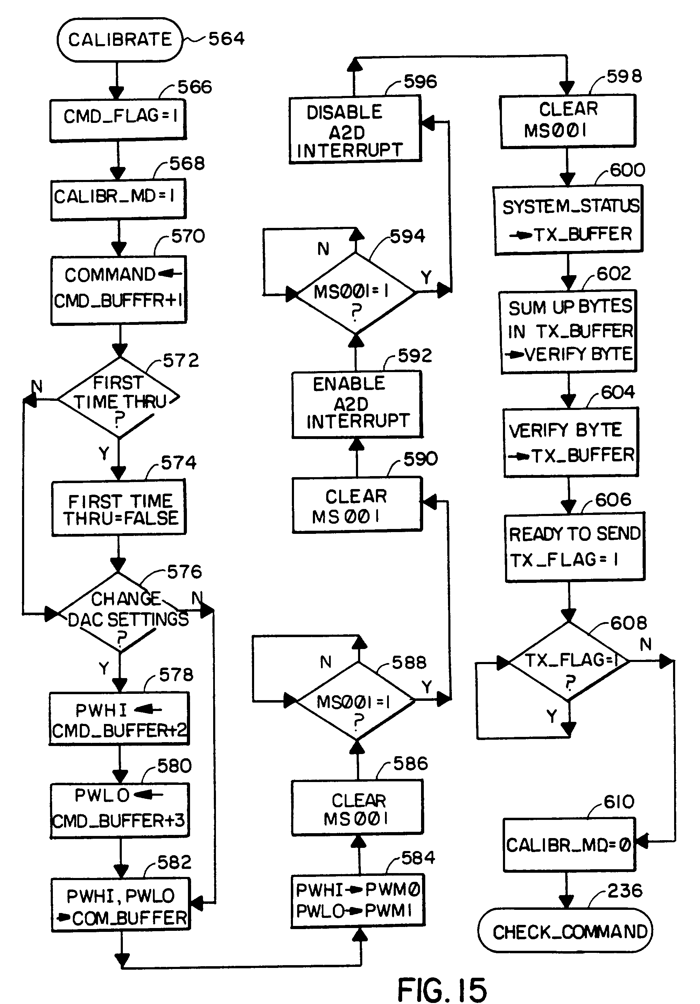

In FIG. 15, the calibrate routine operating the signal translator 10 is shown and is entered in a step 564 the command flag is set equal to one in step 566. The calibrate mode flag is set equal to one in step 568. The command from the command buffer is stored in step 570. A test is made to determine whether this is the first time through the calibrate routine in step 572. If it is the first time through flag is set equal to false in step 574. In step 576, a test is made to determine whether the pulse width modulator settings PWHI and PWLO are to be changed. If not, control is transferred to step 582 where the settings are loaded into the communication buffer. If the settings are to be changed, the second and third contents of the communication buffer are loaded in PWHI and PWLO in steps 578 and 580. Those values are then transferred to the pulse width modulator lines in step 584 and MS001 is cleared in step 586. A test is made in step 588 to determine whether a one millisecond boundary has been crossed. If it has, MS001 is cleared in step 590 and the A to D interrupt is enabled in step 592. The one millisecond test is again performed in step 594. In step 596, the A to D interrupt is disabled and the one millisecond flag is cleared in step 598. In steps 600 through 608, the transmit buffer contents are transmitted back to the calibrator 20. In steps 610, the calibrate mode flag is set equal to zero and control is transferred to check command in step 236.

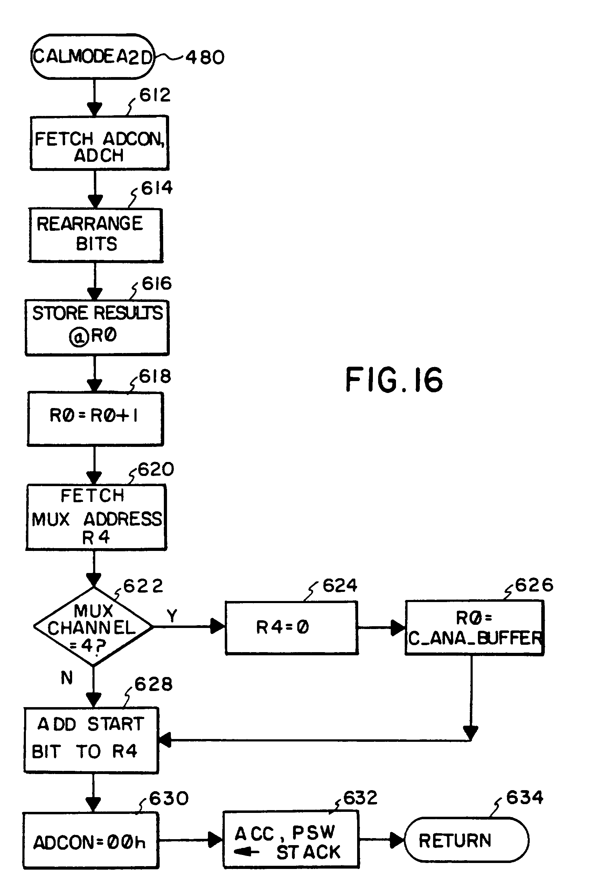

In FIG. 16, the calibrate mode for A to D, step 480 is shown therein. When that routine is entered, the ADCON and ADCH values are fetched from memory in step 612. The bits are rearranged in step 614 and stored in step 616. R0 is incremented in step 618 and the multiplexer address R4 is fetched in step 620. The multiplexer address channel is tested to determine whether it is equal to four in step 622. If it is, R4 is set equal to zero in step 624. R0 is located with the c_analog_buffer contents in step 626. In step 628, the start bit is added to R4. If the multiplexer channel is not set to R4, control is transferred immediately to step 628. In step 630, ADCON is set equal to zero and in step 632, the contents of the accumulator and program status word are restored from the stack, after which in step 634, the routine is exited.

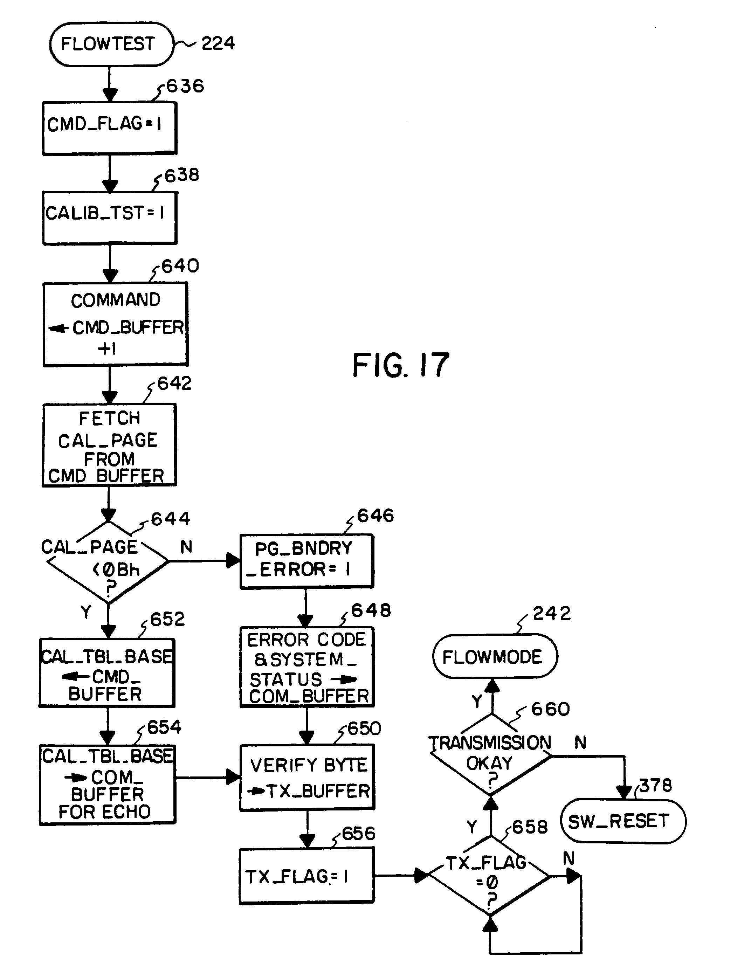

Referring now to FIG. 17, the flow test routine 224 is shown therein. In step 636, the command flag is set equal to one. In step 638, the calibrate test flag is set equal to one. In step 640 the contents of the command are saved in the command buffer. The calibrate page is fetched from the command buffer in step 642 and is tested in step 644 to determine whether it is less than eleven. If it is not less than eleven, a page boundary error flag is set in step 646 and the error code and system status byte are loaded back into the communication buffer in step 648 and the verified byte is loaded into the transmit buffer in step 650. If the calibrate page value is less than eleven, the calibrate table base is loaded from the communication buffer in step 654, and then transferred into the communication buffer for echoing in step 654, after which step 650 is performed. Following step 650, the transmit flag is set equal to one. If a background transmit function has completed, the transmit flag is set equal to zero. It is tested for in step 658, once it is equal to zero, the transmission is checked in step 660 to determine whether it is okay. If it is not, software reset is entered in step 378. If it is, flow mode is entered in step 242.

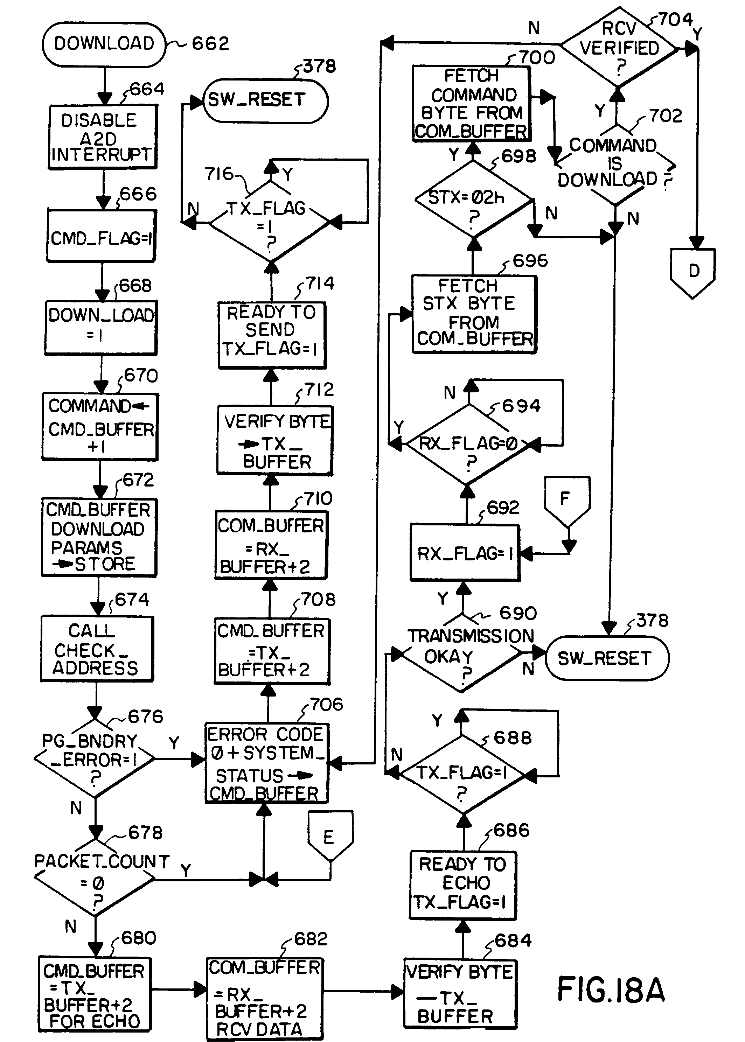

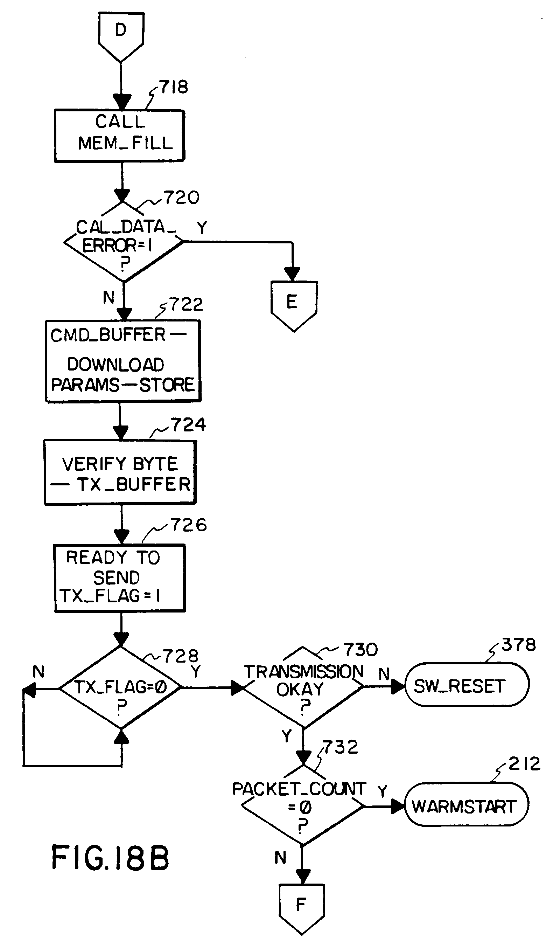

Referring now to FIGS. 18A and 18B, the downloading routine 662 is set forth therein. In the download routine, step 664, the A to D interrupt is disabled. In step 666, command flag is set equal to one. The download flag is set to one in step 668 and the contents of the command buffer are loaded with the command in step 670. The command buffer download parameters are stored in step 672 and check address is called in step 674. A page boundary error is tested for in step 676. If the flag is set equal to zero, the packet count flag is tested for in step 678. If the packet count flag is one, the contents of the command buffer are loaded into the transmit buffer for echoing in step 680. The communications buffer is then equated to the receive buffer in order to receive data in step 682 and the verify byte is loaded in the transmit buffer in step 684. The transmit flag is set equal to one in order to be ready to echo in step 686. The transmit flag is tested for background transmissions in step 688, until the transmit flag is zero. Step 690 tests for transmission okay. If it is not, software reset is entered in step 378. If it is, the receive flag is set equal to one in step 692. The receive flag is tested in step 694. If it is zero, the STX byte is fetched from the communications buffer in step 696 and the STX byte is tested in step 698. If it is equal to two, the command byte is fetched from the communications buffer in step 700. If it is not equal to two, control is transferred to switch reset step 378. Once the command byte has been fetched from the communications buffer, step 702 tests for whether the command is for a download. If it is not, switch reset is entered. If it is, a test is made for whether the receive has been verified in step 704.

In step 706, the error code and system status are loaded into the command buffer. In step 708, the command buffer is set to the transmit buffer. In step 710, the communications buffer is set to the receive buffer. In step 712, the verify byte is loaded in the transmit buffer. In step 714, the transmit flag is set equal to one, indicating ready to send. In step 716, the transmit flag is tested for until it is equal to zero, at which point control is transferred to software reset 378. In the event that the receive verified step 704 is true or yields a yes, control is transferred to step 718 in FIG. 18B where mem_fill is called. After mem_fill completes the cal_data_error flag is tested. If the flag is equal to one, control is transferred back to step 706. If it is equal to zero, the download parameters are retrieved from store and loaded into the command buffer in step 722. The verify byte is loaded into the transmit buffer in step 724. The ready to send transmit flag is set equal to one in step 726 and the transmit flag is tested for until it is equal to zero in step 728, indicating that background transmit tasks have been completed. The transmission is tested for in step 730 to determine if it is okay. If the transmit is not, the software reset routine is entered in step 378. If the transmission is okay, the packet count is tested for in step 732. If it is now equal to zero, control is transferred back to step 692. If it is equal to zero, control is transferred to warm start, step 212.

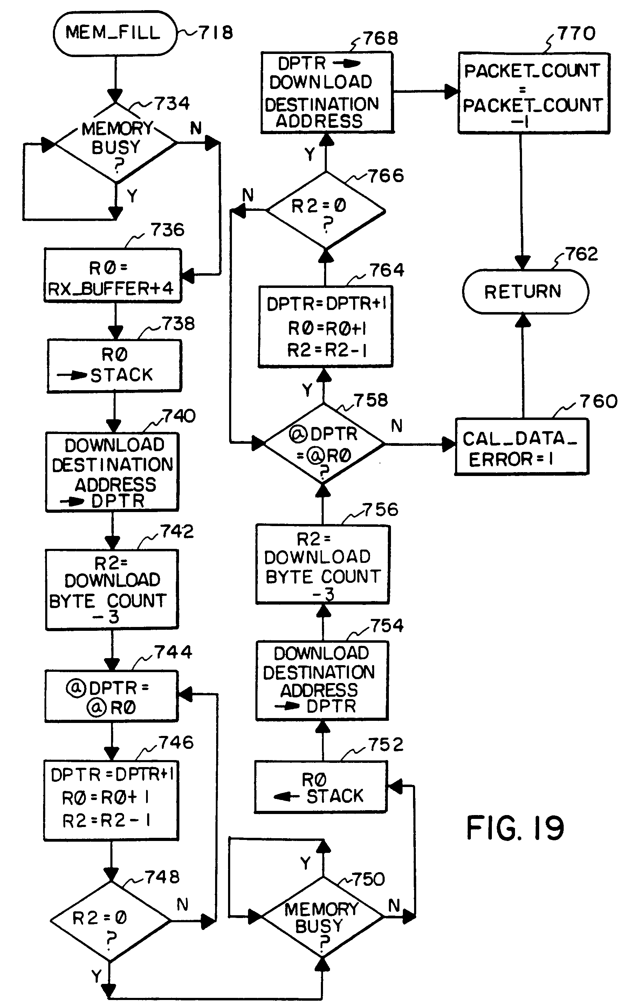

Referring now to FIG. 19, the data from the communications buffer is transferred into the non-volatile memory 44 by the mem_fill routine 718. In the step 734, the non-volatile memory is tested to see if it is busy and continues to be tested until it is unoccupied after which control transfers to step 736 where the R0 is pointed to the calibrate data in the receive buffer. In step 738, R0 is placed on the stack. In step 740 the download destination address is loaded in the data pointer. In step 742, the download byte count minus 3 is loaded into R2. In step 744, the byte is loaded into EPROM. In step 746, the data pointer is incremented, R0 is incremented and R2 is decremented. In step 748, R2 is tested to determine whether it is zero. If it is not, control is transferred back to step 744 for further data transfer into the EPROM. If it is equal to zero, the data packet has been transferred completely to the EPROM. In step 750 another test is made to determine if memory is busy. When memory is not busy, the R0 value is recovered from the stack in step 752 and the download destination address is loaded in the data pointer, in step 754. R2 is loaded with the download byte count minus 3 in step 756. A test is made in step 758 to determine whether the contents of the EPROM are the same as the contents of the command buffer. In step 764, the pointers are incremented and decremented in order to step through the command buffer. A test is made in step 766 to determine whether the entire packet has been tested. In step 768, the data pointer is loaded into the download destination address, indicating the next free location in the non-volatile memory 44. The packet count is set equal to packet count minus 1 and the routine is exited in step 762. In the event that there is an error in loading in the EPROM, control is transferred to step 760, the calibrate data error flag is set and return is made in step 762 from the routine.

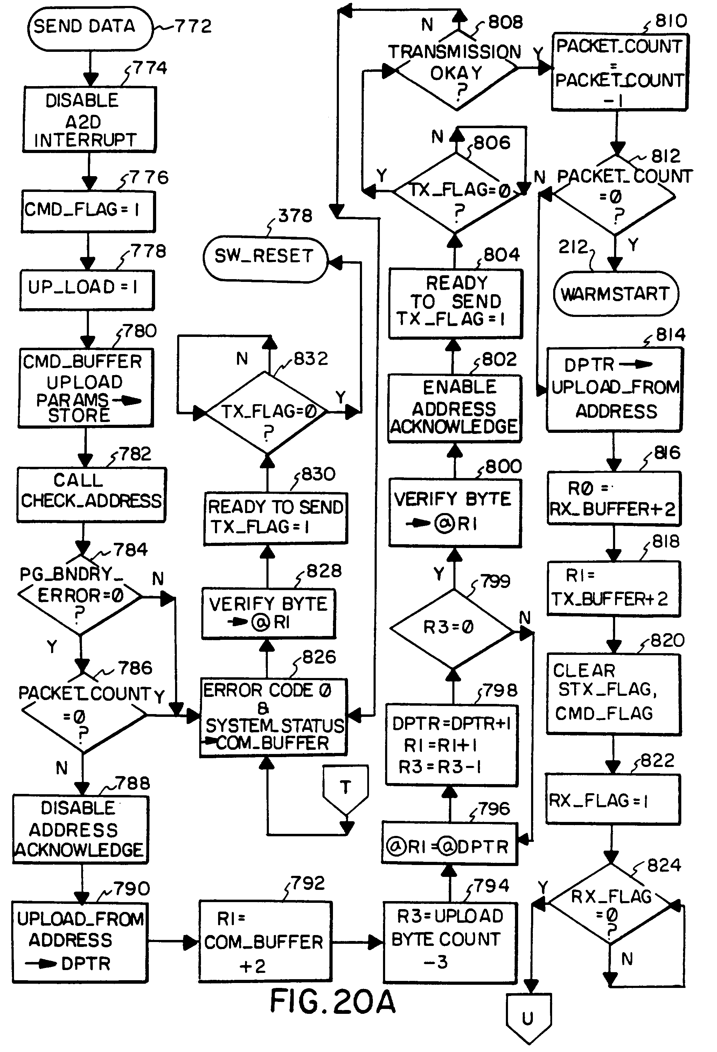

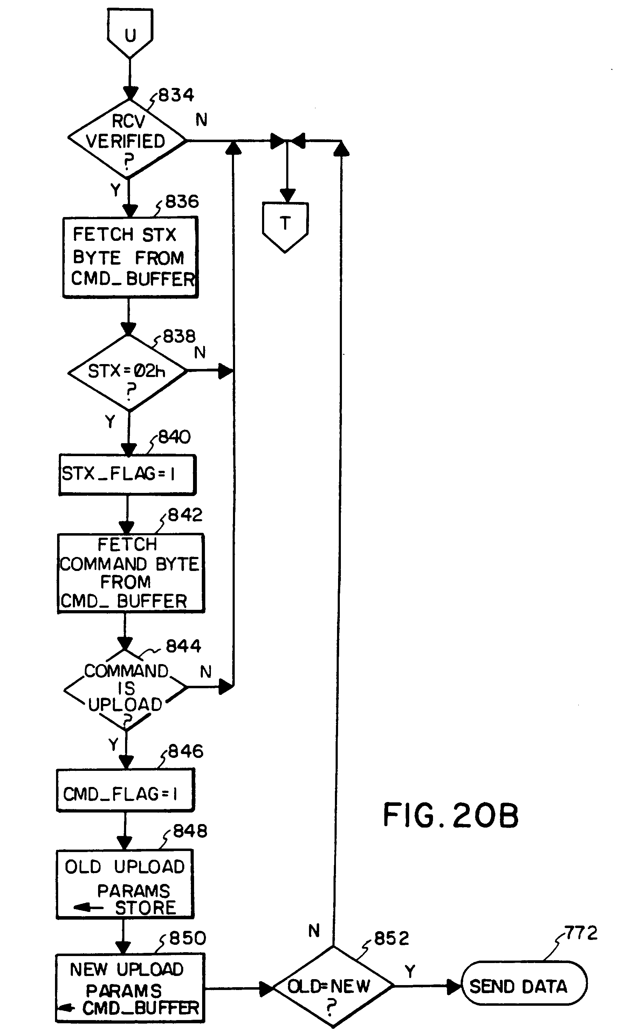

In FIGS. 20A and 20B, the send data routine 772 is set forth. The analog-to-digital converter interrupts are disabled in step 774 and the command flag and upload flags are set equal to one in steps 776 and 778. The command buffer upload parameters are stored in step 780 and the check_address routine is called in step 782. Page boundary error is tested for in step 784 if the flag is set, control transfers to step 826. If the flag is not set, the packet count is tested to determine whether it is zero in step 786. If the packet count is equal to zero, control transfers to step 826. If the packet count is not equal to zero, the address acknowledge is disabled in step 788. The upload_from address is loaded in DPTR in step 790. R1 is loaded with the communications buffer +2 address in step 792. R3 is loaded with the upload byte count minus 3 address in step 794. The contents of the EPROM are then transferred to the communications buffer in steps 796-799. The verify byte is placed in the communications buffer in step 800. Enable address acknowledge occurs in step 802. The ready to send transmit flag is set equal to one in step 804. The transmit flag is tested for until it is equal to zero in step 806. Transmission okay is tested for in step 808. If the transmission has failed, step 826 is entered. If the transmission has succeeded, the packet count is decremented in step 810. It is tested to determine whether it is equal to zero in step 812. If it is equal to zero, the warm start routine 212 is entered. If it is not equal to zero, the data pointer is loaded with the upload from address in step 814. In step 816, R0 is loaded with the receive buffer address. In step 818, R1 is located with a transmit buffer address. In step 820, the STX and command flags are cleared. In step 822, the receive flag is set equal to one. In step 824, the receive flag is tested until it equals zero. When the receive flag equals zero, control is transferred to step 834 as shown in FIG. 20B. If the receive is verified, control transfers to step 836, the STX byte is fetched from the command buffer. STX is tested in step 838 to determine whether it equals two. If it does, the STX flag is set equal to one. In step 840 and in step 842, the command byte is fetched from the command buffer. In step 844, the command is tested to determine whether it is an upload command. If it is not, control transfers to step 852. It if is, control transfers to step 846 where the command flag is set equal to one. The old upload parameters are accessed from storage in step 848 and the new upload parameters are accessed from the command buffer in step 850. In step 852, a test is made to determine whether the old equals the new. If they do not, control is transferred to step 826. If the old does equal the new, the data is sent in step 772.

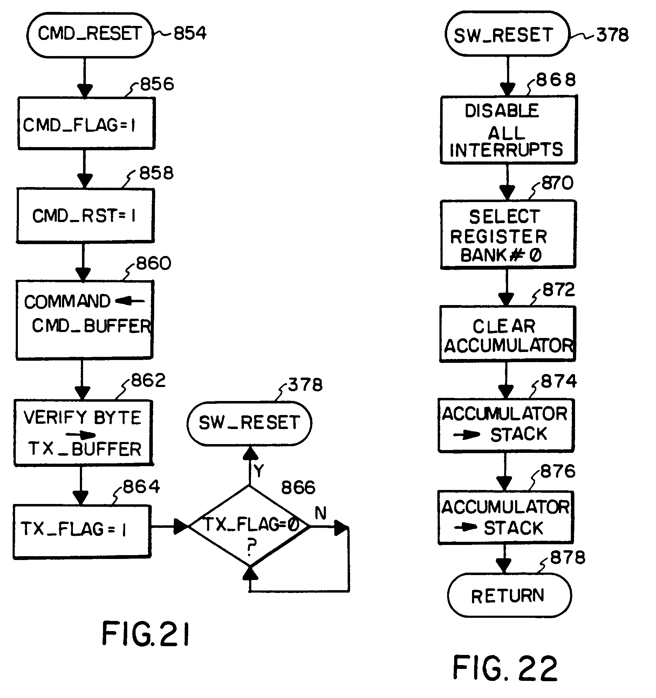

In FIG. 21, the command reset routine 854 is shown. In step 856, the command flag is set equal to one, as is the command reset flag in step 858. The contents of the command buffer are loaded in COMMAND. The verify byte, in step 862, is loaded in the transmit buffer. The transmit flag is set equal to one in step 864. The transmit flag is tested in step 866. When it reaches zero, after background transmission has occurred, software reset occurs in step 378.

In FIG. 22, the software reset routine 378 is set forth. In step 868, all interrupts are disabled. In step 870 the register bank zero is selected. In step 872, the accumulator is cleared. In step 874, the accumulator is transferred to the stack. The accumulator is also loaded onto the stack a second time in step 876 and the routine is returned from in step 878.

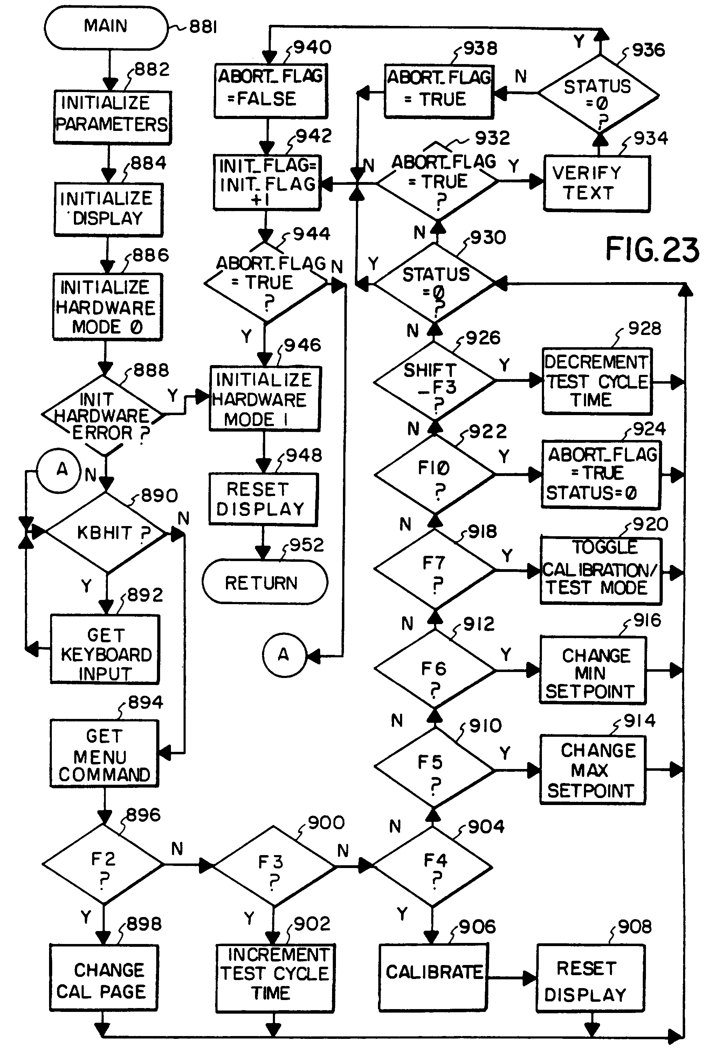

The main calibration routine, which executes on the computer 22 to operate the calibrator 20 in order to calibrate the mass flow controller 12, is set forth in FIG. 23. In the main routine, step 882 initializes the parameters. In step 884 the display is initialized for the personal computer 22. It initializes the hardware mode to zero in step 886. Initializing hardware error is tested for in step 888. If there is no hardware error, a test is made in step 890 to determine whether the keyboard has been activated. If so, the keyboard input is retrieved in step 892. If not, a menu command routine is entered in step 894 and function keys F2 through F10 are tested for actuation in steps 896, 900, 904, 910, 912, 918, 922 and 926. If key F2 has been hit to change calibrate page, it is changed in step 898. If key F3 has been hit, the test cycle time is incremented in step 902. If key F4 has been hit, the calibrate routine is entered in step 906 and the display is reset in step 908. If F5, the maximum set point is changed in step 914. If F6 has been hit, the minimum set point is changed in step 916. If F7 has been hit, the toggle calibration/test mode is entered in step 920. If F10 is entered, the calibration process is aborted. If shift-F3 is hit in step 926, the test cycle time is decremented. After the key testing has been done, status is tested in step 930 to determine whether it is equal to zero. If not, the abort flag is tested for equal to true in step 932 and exit is verified in step 934. After which the status is again tested in step 936. If it is equal to zero, the abort flag is set to false. In step 940, the initialization flag is incremented in step 942. After which the abort flag is tested again in step 944. If it is false, step 890 is entered. If it is true, hardware mode one is initialized and step 946 and the display is reset in step 948.

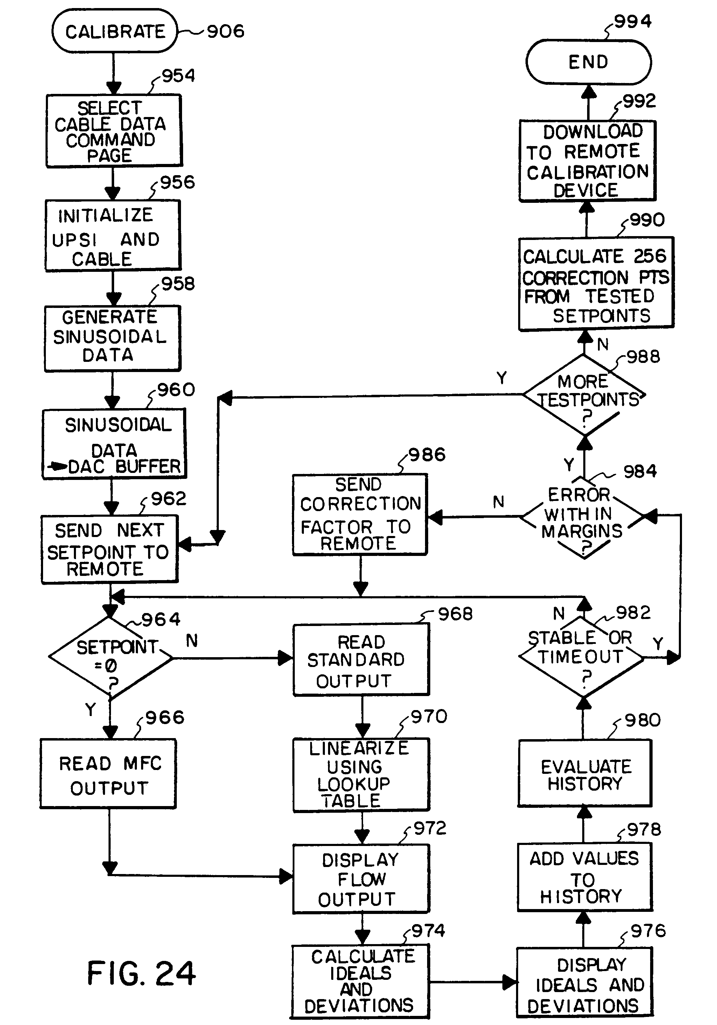

In FIG. 24, the calibrate routine is set forth. In step 954, the cable data or signal translator data command page is selected. In step 956, the parallel serial interface and the signal translator or cable are initialized. In step 958, sinusoidal data are generated. In step 960, the sinusoidal data is transferred to a digital-to-analog converter buffer. In step 962, the set points or data points which are being selected as the sinusoidal data in step 960 are transferred to the calibrator 20 causing the calibrator 20 to flow the selected amount of gas through line 32. The set point is tested to determine whether it is equal to zero. If it is not, the output of the standard mass flow meter 18 is read in step 968. In step 970, if any entries are already stored in the lookup table in the computer 22, an attempt is made to linearize or correct the flow at that point. After that step occurs, the flow output is displayed. In step 974 the ideal flow is calculated and any deviation as a result of the previous linearization in step 970 is also calculated. The calculated ideal and the deviation values are displayed in step 976. In step 978, those values are added to a history table. In step 980, the history table is evaluated. In step 982, a test is determined as to whether the values are changing or stable with time. In step 984, a test is made to determine whether the correction is within error margins. If it is, the more test points test step 988 is entered. If more test points are desired, control is transferred back to step 962. If not, the 256 correction points are calculated from the tested set points after which the 256 points are downloaded in step 992 to the signal translator 10 and the routine ends.

In the event that the set point is set equal to zero in step 969, step 966 read, the mass flow controller output and transfers control to step 972.

Thus, the routine in FIG. 24 generates multiple point sinusoidal data of up to 256 points wherein the period of the sinusoid is ten times the time constant of the mass flow controller. It may be appreciated that the sinusoid is stepped in small digital increments which do not substantially effect the settling time of the mass flow controller 12.

In view of the above, it will be seen that the several objects of the invention are achieved and other advantageous results attained.

As various changes could be made without departing from the scope of the invention, it is intended that all matter contained in the above description shall be interpreted as illustrative and not in a limiting sense.

## Claims

1. An apparatus (10) for calibrating a mass flow controller (12), comprising:
means (22, 40) arranged to generate a mass flow controller command signal which is substantially sinusoidal with respect to time and has a period longer than twice a time constant of the mass flow controller (12) and a flow standard (18), said flow standard measuring the gas flow through the mass flow controller and producing a measured flow signal in response;
means (20) for sensing an output signal produced by the mass flow controller (12) in response to the controller (12) following the sinusoidal mass flow controller command signal; and
means (20, 22, 40) for comparing the mass flow controller output signal with the measured signal and producing a mass flow controller calibration signal in response thereto.

2. An apparatus (10) for calibrating a mass flow controller (12) according to claim 1 wherein said means for generating a mass flow controller command signal further comprises a microcontroller.

3. An apparatus (10) for calibrating a mass flow controller (12) according to claim 1 further comprising means for outputting any deviation from ideal flow (974).

4. An apparatus (10) for calibrating a mass flow controller (12) according to claim 3 further comprising means (980) for storing points of deviation from ideal flow rate.

5. An apparatus (10) for calibrating a mass flow controller (12) according to claim 1 wherein said mass flow controller command signal comprises a plurality of discrete stepwise digitized signals.

6. An apparatus (10) for calibrating a mass flow controller (12) according to claim 1 wherein said means for generating a mass flow controller command signal having a period longer than twice the time constant of the mass flow controller (12) varies the command signal in small enough increments so as not to substantially affect the settling time of the mass flow controller (12).

## Patentansprüche

1. Einrichtung (10) zum Kalibrieren eines Massenflußreglers (12), umfassend:
ein Mittel (22, 24), welches zum Erzeugen eines Massenflußregler-Befehlssignals eingerichtet ist, welches bezüglich der Zeit im wesentlichen sinusförmig ist und eine Periode aufweist, die länger ist als das Doppelte einer Zeitkonstante des Massenflußreglers (12) und eines Flußstandards (18), wobei der Flußstandard den Gasfluß durch den Massenflußregler mißt und ein gemessenes Flußsignal in Antwort darauf erzeugt,
ein Mittel (20) zum Erfassen eines Ausgangssignals, welches durch den Massenflußregler (12) in Antwort darauf erzeugt wird, daß der Regler (12) dem sinusförmigen Massenflußregler-Befehlssignal folgt, und
ein Mittel (20, 22, 40) zum Vergleichen des Massenflußregler-Ausgangssignals mit dem gemessenen Signal und zum Erzeugen eines Massenflußregler-Kalibriersignals in Antwort darauf.

2. Einrichtung (10) zum Kalibrieren eines Massenflußreglers (12) nach Anspruch 1, worin das Mittel zum Erzeugen eines Massenflußregler-Befehlssignals ferner einen Mikroprozessor umfaßt.

3. Einrichtung (10) zum Kalibrieren eines Massenflußreglers (12) nach Anspruch 1, ferner umfassend ein Mittel zum Ausgeben jeglicher Abweichung von dem idealen Fluß (974).

4. Einrichtung (10) zum Kalibrieren eines Massenflußreglers (12) nach Anspruch 3, ferner umfassend ein Mittel (980) zum Speichern von Abweichungspunkten von der idealen Flußrate.

5. Einrichtung (10) zum Kalibrieren eines Massenflußreglers (12) nach Anspruch 1, worin das Massenflußregler-Befehlssignal eine Mehrzahl von diskreten, stufenweise digitalisierten Signalen umfaßt.

6. Einrichtung (10) zum Kalibrieren eines Massenflußreglers (12) nach Anspruch 1, worin das Mittel zum Erzeugen eines Massenflußregler-Befehlssignals, welches eine Periode aufweist, die länger als das Doppelte der Zeitkonstante des Massenflußreglers (12) ist, das Befehlssignal in ausreichend kleinen Stufen ändert, um die Einschwingzeit des Massenflußreglers (12) nicht wesentlich zu beeinträchtigen.

## Revendications

1. Dispositif (10) pour étalonner un régisseur de débit massique (12), comprenant :
un moyen (22, 40) conçu pour produire un signal de commande de régisseur de débit massique qui est sensiblement sinusoïdal en fonction du temps et qui a une période plus longue que deux fois la constante de temps du régisseur de débit massique (12) et un étalon de débit (18), ledit étalon de débit mesurant le débit de gaz dans le régisseur de débit massique et produisant, en réponse, un signal de débit mesuré ;
un moyen (20) pour détecter un signal de sortie produit par le régisseur de débit massique (12) en réponse au fait que le régisseur (12) suit le signal sinusoïdal de commande de régisseur de débit massique ; et
un moyen (20, 22, 40) pour comparer le signal de sortie de régisseur de débit massique au signal mesuré, et pour produire, en réponse à cela, un signal d'étalonnage de régisseur de débit massique.

2. Dispositif (10) pour étalonner un régisseur de débit massique (12) selon la revendication 1, dans lequel ledit moyen pour produire un signal de commande de régisseur de débit massique comprend, en outre, un microrégisseur.

3. Dispositif (10) pour étalonner un régisseur de débit massique (12) selon la revendication 1, comprenant, en outre, un moyen pour sortir tout écart par rapport à un débit idéal (974).

4. Dispositif (10) pour étalonner un régisseur de débit massique (12) selon la revendication 3, comprenant, en outre, un moyen (980) pour mémoriser des points d'écart par rapport au débit idéal.

5. Dispositif (10) pour étalonner un régisseur de débit massique (12) selon la revendication 1, dans lequel ledit signal de commande de régisseur de débit massique comprend plusieurs signaux numérisés, discrets, en échelons.

6. Dispositif (10) pour étalonner un régisseur de débit massique (12) selon la revendication 1, dans lequel ledit moyen pour produire un signal de commande de régisseur de débit massique qui a une période plus longue que deux fois la constante de temps du régisseur de débit massique (12) fait varier le signal de commande en des incréments suffisamment petits pour ne pas affecter sensiblement le temps de stabilisation du régisseur de débit massique (12).
